# EUROPEAN PATENT SPECIFICATION

(11) **EP 0 542 919 B1**
(45) Date of publication and mention of the grant of the patent: **19.04.1995**
(21) Application number: 91917210.6
(22) Date of filing: 08.08.1991
(51) Int. Cl.: A01N 25/30, A01N 25/02

(54) **EXTENDER FORMULATION IMPARTING SUSTAINING PROPERTIES TO AGRICULTURAL PRODUCTS**
STRECKUNGSMITTELFORMULIERUNG MIT UNTERSTÜTZENDEN EIGENSCHAFTEN FÜR LANDWIRTSCHAFTLICHE PRODUKTE
FORMULATION D'AGENT D'ALLONGEMENT CONFERANT DES PROPRIETES RENFORCEES A CERTAINS PRODUITS AGRICOLES

(30) Priority: 08.08.1990 US 565023; 07.06.1991 US 711929
(43) Date of publication of application: 26.05.1993
(73) Proprietor: CARLTON LAHEY CHEMICALS, INC., Longwood, FL 32779 (US)
(72) Inventor: CARLTON, W., Reid, Longwood, FL 32779 (US); LAHEY, Thomas, P., Newport Beach, CA 92663 (US)
(74) Representative: Goldin, Douglas Michael
(86) International application number: PCT/US91/05644
(87) International publication number: WO 92/02233

(56) References cited:
- FR-A- 2 588 724
- US-A- 3 329 563
- US-A- 3 442 818
- US-A- 3 683 078

## Description

### Technical Field

Compositions are provided for use as agricultural emulsifying extenders with sustaining properties imparted to the agricultural products.

### Background of the Invention

There is a critical need to minimize the quantity and frequency of application of pesticides and other agricultural products to crops and to increase the effectiveness of pest control using existing pesticides. There are many instances where increasing amounts of newly developed and increasingly toxic economic poisons are required to kill or control pests on plants and crops. Increasing public awareness of residual surface and systemic pesticide concentrations in fruit and vegetables has resulted in chemical testing of fruits and vegetables for the pesticides with high concentrations in crops resulting in increased consumer cost and crop devaluation. Additionally, bacteria and insects which are not targeted pests but are beneficial to the crops are often destroyed as a result of the application of presently formulated economic poisons at manufacturer's labeled rates. The 5 to 30 day period of pest control following application of some economic poisons typically requires a 90 to 180 day period before recommended subsequent reapplication. This required reapplication interval allows for significant repopulation of the targeted pest(s) in a given growing season or requires an additional application of other economic poisons at both significant environmental and economic cost to the grower.

Recognizing the labeled restrictions on application of economic poisons, the farmer has resorted to reducing the recommended concentration of economic poisons using extenders and increased the frequency of spray application. By decreasing the quantity of sprayed pesticide per acre (0.4 ha) crop, the residual pesticide concentration on the crops is minimized. However, the acquired resistance by the targeted pests to the economic poisons is increased by this practice. Additionally, the higher frequency of sprayed application is costly, and the duration of pest control on the crop is decreased. One of the problems is loss of the applied economic poison from the targeted surfaces by the effects of rainfall or condensate dripping off of those plant surfaces.

There is, therefore, a substantial interest in being able to significantly improve the duration of pest control and activity of the applied economic poison formulations to minimize the concentration of pesticides on the fruit or vegetables, and the acquired resistance by the targeted pests to the economic poisons.

### Description of the Relevant Literature

United States Patent No. 3,930,010 describes a fungicide which, when formulated with nonionic and anionic surfactants at or above their critical micelle concentration in the sprayed composition, yields improved fungicidal activity with continuing safety to the treated plants. United States Patent No. 3,984,570 to Bent et al. describes certain surface active agents which are used to combat specific fungal diseases in plants. United States Patent No. 4,212,870 to Gibbs discloses an insecticide with systemic activity which is applied with the aid of surfactants which are essential to the insecticidal activity. United States Patent No. 3,948,636 to Marks shows pesticide compositions which include 10-60% active ingredient, 1-10% surfactant and 0.02 to 1% of a heteropolysaccharide gum (all by weight). United States Patent No. 4,902,333 to Quimby Jr. shows a spray formulation for use in conjunction with fungal pathogens which enables the water to remain in moisturizing contact with the fungus. This formulation includes a water-in-oil emulsion including wax or lecithin plus calcium salt. British Patent No. 1,604,859 discloses the use of nonionic and cationic surfactant in conjunction with monohydric alcohols as insecticidal formulations with low host (human) toxicity and high insecticidal mortality. European Patent Application No. 243,872 of Kimisk Vaerk Koze A.S. shows pesticidal concentrates which include an oily suspension phase carrying a surfactant which includes a C₆-C₃₀ chain-containing moiety.

United States Patent No. 3329563 discloses insecticidal emulsions comprising an insecticide, a phosphate, an organic solvent (e.g. acetone) and a surfactant (e.g. polypropylene glycolethylene oxide condensate).

United States Patent No. 3442818 describes an emulsifying composition for agricultural pesticides comprising a mixture of two non-ionic surfactants and an alkylated aromatic sulphonate, optionally together with an oxyhydrocarbon solvent.

These patents are not intended to be exhaustive, but merely illustrative of the various uses of surfactant(s) essential to the effective application, adsorption, and activity of fungicidal and insecticidal products, which disclosures are incorporated herein by reference.

### Summary of the Invention

We have now discovered an extender composition particularly suitable for use with economic poisons (agricultural pesticides) on citrus crops which imparts sustained activity to economic poisons and substantially reduces the quantity or concentration of these materials required to effect pest control or eradication. This composition can be classed broadly as an oil emulsifying composition.

In one aspect, the present invention provides an extender composition comprising two or more nonionic surfactants; more particularly, one part by weight of a mixture of two or more nonionic surfactants each having an H/L balance in the range of 11 to 15; 0.1 to 1 part of water-miscible oxhydrocarbon organic solvent; 0.25 to 2 parts of inorganic polyoxide or salt thereof; and, optionally, inorganic base. The composition can be formulated into an aqueous solution containing a mixture of nonionic surfactants, organic solvent, inorganic polyoxide or salt thereof and, optionally, inorganic hydroxide When the extender compositions disclosed herein are combined with commercially formulated economic poisons which are in the form of dry flowable powders or emulsifiable concentrates, optionally diluted with water, and applied to citrus crops, substantially improved pest control is achieved with sustained activity of the economic poison at significantly reduced concentrations of the economic poison per acre (0.4 ha) of treated crop.

In addition, the presence of this extender composition appears to impart unexpected additional activity to economic pesticides including, for example, the ability to prevent fertilization of pest eggs and to eradicate insects, mites, fungus and bacteria at all stages of their development including stages before they have had a chance to produce mutated resistant offspring.

In other aspects, this invention provides economic poison formulations which include the subject extender compositions together with economic poisons, water-diluted sprayable formulations which include the economic poison and the extender, and methods of treating citrus crops by applying these formulations, typically at use levels or frequencies below those used for the economic poison without the present extender composition.

### Description of the Specific Embodiments

Compositions are provided which impart sustained and increased activity to economic poisons at significantly reduced concentrations of the economic poison per acre (0.4 ha) of treated citrus crop. The components of the composition will be liquids, granular crystalline solids, and emulsifiable concentrates which are dissolved or emulsified in an aqueous solution. The components include two or more nonionic surfactants, inorganic polyoxide and/or salt thereof, organic solvent and, optionally, a strong inorganic base such as sodium, magnesium, calcium or potassium hydroxide.

### The Surfactants

The nonionic surfactants can be selected from alkyl polyether alcohols, alkyl phenoxy polyethers, alkyl phenoxy polyether alcohols, alcohol-terminated ethoxylated linear alcohols, secondary linear or branched chain alcohols condensed with ethylene or propylene oxide, aromatic ethers, poly(oxyethylene)polyesters, poly(oxyethylene) sorbitol esters, and alkyl cycloaliphatic ethers which have H/L balance values of 1 to 15. We have discovered that a mixture of at least two nonionic surfactants having an H/L balance of 1 to 15 gives best results. H/L balance is a measure of hydrophilicity/lipophilicity and is determined by partitioning a material between water and n-octane. Preferably, the two or more nonionic surfactants have H/L balance values between 11 and 14 and particularly between 13 and 13.5.

To constitute a suitable mixture, typically each of the several surfactants shall make up at least about 10% by weight of the total surfactant. Binary mixtures should range from 90:10 to 10:90, preferably 80:20 to 20:80 and especially 75:25 to 25:75 on a weight basis.

In preferred compositions, one component in the nonionic surfactant mixture meeting these values is a secondary alcohol ethoxylate which contains between 5 and 22 carbon atoms in the alcohol portion condensed with between 5 and 15 ethylene oxide units, preferably a secondary alcohol with between 11 and 15 carbon atoms condensed with 9 ethylene oxide units. 4-tetradecyloxy 9 ethoxylate is a preferred first surfactant. A second component in the nonionic surfactant mixture which meets the H/L values is a p-alkyl (alkyl of 6-20 carbons) phenoxy(polyethyleneoxy)ethanol. We have found the preferred structure of this second nonionic surfactant is para octyl or para nonyl phenol condensed with from 4 to 20 units of ethylene oxide, especially with about 9 units of ethylene oxide. A third nonionic surfactant is often present. This material is a sorbitol polyester polyethoxylate which is composed of up to 5 fatty acids esterified to the sorbitol hydroxyl groups. The preferred composition is a sorbitol pentaoleate molecule condensed with on average of from 5 to 15 and especially about 9 molecules of ethylene oxide. Other materials such as stearates, laurates and the like can be used. The oleates are preferred. These materials are often present in commercial crop oil and can be added separately.

One can, in addition, use mixtures of secondary alcohol ethoxylates and/or members of the ethoxylated alkylphenols.

### The Inorganic Polyoxide

The extender formulation includes inorganic polyoxide or salt thereof. The inorganic polyoxide or salt thereof can be an oxide of phosphorus, silicon or boron, preferably a polyoxide such as metasilicate, pyrophosphate, triborate, more preferably sodium metasilicate, sodium tetraborate, sodium pyroborate, or sodium tripolyphosphate. In other words, the inorganic polyoxide can include, for example, mono-, di- or tri- sodium or potassium phosphate, mono-, di- or tri- sodium or potassium hypophosphate, mono-, di- or tri- sodium or potassium metaphosphate, mono-, di- or tri- sodium or potassium orthophosphate, sodium or potassium pyrophosphate, sodium or potassium tripolyphosphate, sodium or potassium silicate, sodium or potassium disilicate, sodium or potassium metasilicate, sodium or potassium orthosilicate, sodium or potassium metaborate, sodium or potassium tetraborate. We have found that sodium tripolyphosphate is preferred for use in our formulation. Mixtures of polyoxides can be used, if desired.

### The Organic Solvent

The organic solvent can be any oxyhydrocarbon liquid (e.g., alcohol, ether, or ketone) which is completely miscible with water, with at least two but not more than ten carbon atoms, preferably two to six carbon atoms. The alcohol may be a diol or triol, with either esterification or etherization of at least one but not all of the hydroxyl groups to include the cellosolves and the acetates and propionates of the polyols. We have found acetone, methyl ethyl ketone, butyl cellosolve (2-butoxy ethanol), propylene glycol and butylene glycol to be superior solvents for this formulation, with 2-butoxy ethanol (butyl cellosolve) being the preferred solvent in our composition.

### The Hydroxide

Sodium, potassium, calcium, or magnesium hydroxide is an optional component which can be used to adjust the pH of the combined components to a range of 7-14 with sodium hydroxide being preferred in our composition. This hydroxide works together with the polyoxide to buffer the composition in the 7-14 range.

### The Overall Extender Composition

The overall extender composition comprises the following proportions of the above-described materials:

| | Weight Proportion |
|---|---|
| 2 or more nonionic surfactants with H/L balance of 11-15 | 1 part |
| organic solvent | 0.1 to 1 |
| inorganic polyoxide | 0.25 to 2 |
| inorganic hydroxide (optional) | 0 to 1 |
| ethoxylated sorbitol ester (optional) | 0 to 1 |

A preferred extender composition comprises the following:

| | Weight Proportion |
|---|---|
| a 5 to 22 carbon atom secondary alcohol 5-15 ethoxylate plus a paraoctyl or paranonyl phenol with 4-12 ethoxylates in a weight ratio of 90:10 to 10:90 | 1 part |
| oxyhydrocarbon solvent | 0.1 to 1 |
| inorganic polyoxide salt | 0.25 to 2 |
| sodium or potassium hydroxide | 0 to 1 |
| ethoxylated sorbitol ester | 0 to 1 |

More preferred compositions comprise:

| | Weight Proportion |
|---|---|
| a 12 to 16 carbon atom secondary alcohol 7 - 12 ethoxylate plus p-octyl or p-nonyl phenol 4 - 20 ethoxylate in a weight ratio of 80:20 to 20:80 | 1 part |
| a solvent made up of acetone, methyl ethyl ketone, butyl cellosolve, propylene glycol and/or butylene glycol | 0.2 to 0.8 |
| inorganic phosphate or silicate | 0.35 to 1.75 |
| sodium or potassium hydroxide | 0 to 0.75 |
| sorbitol oleate - 5-15 ethoxylate | 0 to 0.75 |

This extender formulation can be put together by simply mixing the various components until homogenous in any suitable mixer.

The extender can contain additional materials such as dyes or other additives without departing from the spirit of the invention.

### Formulations with Poisons

The extender, when used, is formulated with one or more economic poisons. Any sprayable poison-including insecticides, fungicides, miticides and the like can be used, without limitation.

Representative art-known poisons are shown in Table 1.

**Table 1**

| Partial List of Economic Poisons which can be used in Conjunction with Oil Emulsifying Extender Imparting Sustaining Properties | |
|---|---|
| Acaraben * | Nemacur 15G |
| Agrimek * | Propargite * |
| Aliette * | Pyrethins |
| Avermectin B₁ * | Supracide * |
| Azinphos-methyl * | Vendex *50 WP and 4L |
| Benlate * | Dursban* |
| Carzol * | |
| Comite * | |
| Cygon *4EG | |
| Citrus Spray Oil FC 435-66 | |
| Crop Oil | |
| Cupric ammonium hydroxide | |
| Copper Count-N * | |
| Diazinon * | |
| Dicofol*4E | |
| Dicofol 4EC | |
| Dicofol 1.6EC | |
| Difolatan * | |
| Dimethoate * | |
| Ethion * | |
| Ethion plus crop oil | |
| Guthion * | |
| Lorsban * | |
| Malathion * | |
| Methidathion * | |
| Metasystox-R * | |
| Nemacur *3 | |

| | |
|---|---|
| * one or more of these pesticide names may be a registered Trade Mark in an EPC contracting state. | |

Crop oil is one of the more preferred materials which has its effectiveness enhanced by the present invention as are mixtures of crop oil plus other economic poisons.

In these formulations with the extender, the amount of poison can range from its normal use concentration and use levels known in the art to concentrations and use levels as low as 1/5 or less than those used conventionally.

The extender is combined with the commercial economic poison(s) emulsifiable concentrate as supplied by the manufacturer. The mixture is then blended until homogeneous (solution or emulsion). The formulation is simultaneously or serially diluted (dissolved or completely emulsified) in water, and is then applied to the crops again at use levels ranging from 20% to 100% of normal levels and at frequencies of application ranging from 20% to 100% of normal.

### EXAMPLE 1

In order to demonstrate the subject invention, the following experiment was carried out.

The formulation was prepared as follows: to 200 grams of 4-tetradecyloxy (polyethyleneoxy) ethanol was added 90 grams of 2-butoxy-ethanol with stirring at room temperature. To this mixture was then added 360 grams of a 25% w/w solution of sodium tripolyphosphate in water. This mixture was again stirred at room temperature until thoroughly mixed. To this mixture was then added 90 grams of p-octylphenoxy (polyethyleneoxy) ethanol, 10 grams of sodium hydroxide pellets, and the mixture was stirred until all the sodium hydroxide was dissolved. To this mixture was added 120 grams (2 fluid ounces) of Agrimek (Avermectin B₁) pesticide which is used to control citrus rust mites and other pests on citrus. To this mixture was added 1 gallon (3.79 dm³) of Citrus Spray Oil FC 435-66 (crop oil) and 150 grams of poly(oxyethylene) sorbitol pentaoleate and stirred until uniformly mixed. The combined components of the formulation were then diluted into 5 gallons (5x3.79 dm³) of water and mixed until emulsified and transferred into a spray tank on a helicopter.

To test the effect of the formulation, the emulsified economic poison formulation described above was spray applied at the above concentrations per one acre (0.4 ha) of Florida navel oranges, which were heavily infested with citrus rust mites. The results of the experiment indicated that total targeted pest control was obtained for 120 days following application of the emulsified pesticide.

A control experiment to validate the efficacy of the invention was also performed using a mixture of 54 grams of Agrimek (Avermectin B₁) in 1 gallon (3.79 dm³) of Citrus Spray Oil FC 435-66 (crop oil) emulsified in 5 gallons (5x3.79dm³) of water. This mixture was applied at these concentrations per one acre (0.4 ha) of the same crop of Florida navel oranges with identical infestation by citrus rust mites. No targeted pest control was observed using this protocol for application of the agricultural product.

Additionally, in a third experiment using the manufacturer's recommended application protocol, 370 grams of Agrimek (Avermectin B₁) was dissolved in 1 gallon (3.79 dm³) of Citrus Spray Oil FC-435-66 (crop oil) and was emulsified in 99 gallons (99x3.79 dm³) of water and spray applied at these concentrations to one acre (0.4ha) of the same crop of Florida navel oranges with identical infestation by citrus rust mites. This resulted in targeted pest control for 65 days.

Thus, the experiment showed that for over 120 days, the crops treated with a significantly lesser quantity of pesticide applied with the emulsifying and extending formula exhibited total pest control. The crops that were not treated with the formulation but with an identical quantity of pesticide in crop oil were not controlled whatsoever. Using significantly higher quantities of the Agrimek (Avermectin B₁) per the manufacturer's recommended application protocol, pest control was observed for only 65 days. The results of this experiment are presented in Table 2.

**Table 2**

| Efficacy of Emulsifying Extender Imparting Sustaining Properties on Citrus Rust Mites | |
|---|---|
| Composition of Economic Poison | Pest Control Period, days |
| 1 gal.* crop oil | 0 |
| 5 gal.* water | |
| 120 grams Agrimek (Avermectin B₁) | |
| 1 gal.* crop oil | 65 |
| 99 gallons* water | |
| 370 grams Agrimek (Avermectin B₁) | |
| 1 gal.* crop oil | 120+ |
| 5 gal.* water | |
| 54 grams Agrimek (Avermectin B₁) | |
| 150 gr. poly(oxyethylene) sorbitol pentaoleate | |
| 200 gr. 4-tetradecyloxy (polyethoxy) ethanol | |
| 320 gr. 25% sodium tripolyphosphate | |
| 90 gr. 2-butoxy ethanol | |
| 90 gr. p-octylphenoxy poly(ethyleneoxy) ethanol | |
| 10 gr. sodium hydroxide | |

| | |
|---|---|
| * 1 gal = 3.79 dm³ | |

### EXAMPLE 2

Similar experiments were performed on one acre (0.4 ha) and ten acre (4 ha) plots of Florida navel oranges using the same emulsifying extender formula but with ethion instead of Avermectin B₁. Our experiment using the ethion mixed with the emulsifying extender composition resulted in extended pest control (over 150 days) at less than 40% of the manufacturer's recommended application protocol. Usage of the ethion without the oil emulsifying extender imparting sustaining properties at recommended application protocol provided significantly lesser pest control for a period of 30 days requiring additional reapplication of other economic poisons to control the targeted pests.

### EXAMPLE 3

A stock solution of the extender formulation of the invention was prepared including the following materials in the following proportions:
200 g. 4-tetradecyl alcohol 9-ethoxylate
90 g. p-octylphenol 9-ethoxylate
90 g. 2-butoxy-ethanol
90 g. sodium triphosphate
10 g. sodium hydroxide
270 g. water
This material was mixed with spray oil and water and sprayed on citrus at the following rates:
0.5 and 1 gallon/acre (1.9 and 3.79 dm³/0.4 ha) extender
0.75 and 1.5 gallon/acre (2.84 and 5.69 dm³/0.4ha) spray oil
124.75 and 123.5 gallon/acre (472.8 and 468 dm³/0.4 ha) acre water
For comparison Vendex was applied at typical conventional use levels to adjacent trees. An equal number of leaves were examined in each of the three test groves.

The composition of the invention at 1.0 gallon/acre (3.79 dm³/0.4 ha) showed 9 leaves with rust mites--6 with 1 mite, 1 with 2 mites, 1 with 9 mites and 1 with 18 mites. The composition at half rate showed 18 leaves with mites--16 with 1 mite, 1 with 2 mites, and 1 with 5 mites. In contrast, the prior art material showed 19 leaves with mites--10 with 2 or more in one test and 39 leaves with mites--31 with 2 or more in a replication.

### EXAMPLE 4

A test of product longevity was carried out using the extender composition of Example 3.

In a first test,
64 oz. (1.8 kg) - extender
128 oz (3.6 kg) - crop oil 435
54 oz. (1.53 kg) - Citri-Film
1280 oz. (36.3 kg) - Water
was applied per acre (0.4 ha) to navel orange trees. Rust mite counts were carried out prior to spraying and 64 and 96 days thereafter.

Rust mite counts of 6-75 were observed initially. After the elapsed time (64 or 96 days), no more than 2 mites were observed.

### EXAMPLE 5

Example 4 was repeated using Marcotts tangerine trees as the test crop.

The spray was 70.0 oz. (1.98 kg), extender, 128 oz (3.6 kg) crop oil, 640 oz. (18 kg) water per acre (0.4 ha).

Rust mite counts went from 10-28 before spraying, to from 0-3 33 and 67 days thereafter.

### EXAMPLE 6

The test of Example 4 was repeated using valencia orange trees as the test crop. The spray was 76.0 oz (2.15 kg) extender, 384 oz (10.9 kg) 435 crop oil, 1920 oz. (54.4 kg) water per acre (0.4 ha). Rust mite populations were reduced a factor of at least 10 and repeated at these low levels for 55 days.

### EXAMPLE 7

One gallon (3.79 dm³) of the extender of Example 3 was mixed with 1.5 oz. (42.5g) of Carzol and applied to an acre (0.4 ha) of citrus with 250 gallons (946 dm³) of water.

The same formulation without extender was applied for comparison. The test material reduced rust mite counts from 45-47 to 1-3. The comparison formulation only reduced mite counts from 45-47 to 44-45.

### EXAMPLE 8

The experiment of Example 7 is repeated using Dursban-0.00125% as an anti-aphid agent. When extender is present, all aphids are killed. When not present, about 50% are killed.

It is evident from the above results that greatly improved performance is achieved using the emulsifying extender for use with economic poisons to control pests over extended periods of time at reduced usage rates. In this manner, a single application of the economic poison using the emulsifying extender is sufficient for pest control during an entire growing season of crop(s). In addition, the use of the emulsifying extender in conjunction with the economic poisons increases efficiency, crop yield, reduces the quantity of pesticides applied and the residual pesticide on the crop, and provides for a variety of economies.

Although the foregoing invention has been described in some detail by way of illustration, and examples for purposes of clarity and understanding, it will be obvious that certain changes may be practiced within the scope of the appended claims.

## Claims (Claims for the following Contracting State(s): AT, BE, CH, DE, DK, FR, GB, GR, IT, LI, LU, NL, SE)

1. An agricultural emulsifying extender composition capable of imparting sustaining properties and increased efficacy when combined with an economic poison on citrus crops, the emulsifier comprising:
one part by weight of a mixture of two or more nonionic surfactants each having an H/L balance of 11 to 15,
0.25 to 2 parts of inorganic polyoxide or salt thereof, and
0.1 to 1 part of water miscible oxyhydrocarbon organic solvent.

2. An agricultural emulsifying extender composition according to claim 1, wherein said mixture of two or more nonionic surfactants includes at least 10% by weight of alkyl phenoxy (polyethyleneoxy) ethanol.

3. An agricultural emulsifying extender composition according to claim 1 or claim 2 wherein said mixture of two or more nonionic surfactants includes at least 10% by weight of p-octyl phenoxy (polyethyleneoxy) ethanol.

4. An agricultural emulsifying extender composition according to claim 1 or claim 2 wherein said mixture of nonionic surfactants includes at least 10% by weight of p-nonyl phenoxy (polyethyleneoxy) ethanol.

5. An agricultural emulsifying extender composition according to claim 1, wherein said mixture of nonionic surfactants include at least 10% by weight of an alkyl phenolate condensed with about 9 units of ethylene oxide.

6. An agricultural emulsifying extender composition according to any one of claims 1 to 5, wherein said inorganic polyoxide or salt thereof is a polyoxide of phosphorus.

7. An agricultural emulsifying extender composition according to any one of claims 1 to 5, wherein said inorganic polyoxide or salt thereof is a polyoxide of silica.

8. An agricultural emulsifying extender composition according to claim 7, wherein said inorganic polyoxide or salt thereof is sodium metasilicate.

9. An agricultural emulsifying extender composition according to claim 6, wherein said inorganic polyoxide or salt thereof is sodium tripolyphosphate.

10. An agricultural emulsifying extender composition according to any one of claims 1 to 5, wherein said inorganic polyoxide or salt thereof is a salt of boron.

11. An agricultural emulsifying extender composition according to claim 10, wherein said inorganic polyoxide or salt thereof is sodium pyroborate.

12. An agricultural emulsifying extender composition according to claim 10, wherein said inorganic polyoxide or salt thereof is sodium tetraborate.

13. An agricultural emulsifying extender composition according to any one of claims 1 to 12, additionally comprising sodium or potassium hydroxide added to the formulation to adjust the pH of the solution to between 7 and 14.

14. An agricultural emulsifying extender composition according to any one of claims 1 to 13, wherein said organic solvent is 2-butoxyethanol.

15. An agricultural emulsifying extender composition according to any one of claims 1 to 13, wherein said organic solvent is propylene glycol.

16. An agricultural emulsifying extender composition according to any one of claims 1 to 13 wherein said organic solvent is butylene glycol.

17. An agricultural pesticide formulation comprising economic poison in combination with an extender composition as claimed in any one of the preceding claims.

18. A formulation of claim 17 additionally comprising water diluent to a sprayable concentration of poison.

19. A formulation of claim 17 or claim 18 wherein the economic poison comprises crop oil.

20. A formulation of claim 19 wherein the extender includes poly(ethyleneoxy) sorbitol oleate ester as a nonionic surfactant.

21. A method for controlling pests on a citrus crop comprising spray applying a formulation of claim 18 to said crop, said extender imparting sustaining properties to the economic poison and increasing the efficacy of the economic poison.

## Claims (Claims for the following Contracting State(s): ES)

1. A method for controlling pests on a citrus crop comprising spray applying an agricultural pesticide formulation comprising:
(i) an economic poison,
(ii) an agricultural emulsifying extender capable of imparting sustaining properties and increased efficacy when combined with an economic poison on citrus crops, and
(iii) water as a diluent to give a sprayable formulation, said emulsifying extender comprising:-
one part by weight of a mixture of two or more nonionic surfactants each having an H/L balance of 11 to 15,
0.25 to 2 parts of inorganic polyoxide or salt thereof, and
0.1 to 1 part of water miscible oxyhydrocarbon organic solvent.

2. A method as claimed in claim 1 wherein said emulsifying extender includes at least 10% by weight of alkyl phenoxy (polyethyleneoxy) ethanol.

3. A method as claimed in claim 1 or claim 2 wherein said emulsifying extender includes at least 10% by weight of p-octyl phenoxy (polyethyleneoxy) ethanol.

4. A method as claimed in claim 1 or claim 2 wherein said emulsifying extender includes at least 10% by weight of p-nonyl phenoxy (polyethyleneoxy) ethanol.

5. A method as claimed in claim 1 wherein said emulsifying extender includes at least 10% by weight of an alkyl phenolate condensed with about 9 units of ethylene oxide.

6. A method as claimed in any one of claims 1 to 5 wherein said emulsifying extender includes a polyoxide of phosphorus.

7. A method as claimed in any one of claims 1 to 5 wherein said emulsifying extender includes a polyoxide of silica.

8. A method as claimed in claim 7 wherein said emulsifying extender includes sodium metasilicate.

9. A method as claimed in claim 6 wherein said emulsifying extender includes sodium tripolyphosphate.

10. A method as claimed in any one of claims 1 to 5 wherein said emulsifying extender includes a salt of boron.

11. A method as claimed in claim 10 wherein said emulsifying extender includes sodium pyroborate.

12. A method as claimed in claim 10 wherein said emulsifying extender includes sodium tetraborate.

13. A method as claimed in any one of claims 1 to 12 wherein said emulsifying extender additionally comprises sodium or potassium hydroxide to adjust the pH to between 7 and 14.

14. A method as claimed in any one of claims 1 to 13 wherein said emulsifying extender includes 2-butoxyethanol.

15. A method as claimed in any one of claims 1 to 13 wherein said emulsifying extender includes propylene glycol.

16. A method as claimed in any one of claim 1 to 13 wherein said emulsifying extender includes butylene glycol.

17. A method as claimed in any one of claims 1 to 16 wherein the economic poison comprises crop oil.

18. A method as claimed in claim 17 wherein the emulsifying extender includes poly(ethyleneoxy) sorbitol oleate ester as a nonionic surfactant.

19. A method of preparing an agricultural pesticide formulation for use in a method as claimed in claim 1 which comprises combining an economic poison, an agricultural emulsifying extender as defined in claim 1 and water as a diluent to give a sprayable formulation.

## Patentansprüche (Patentansprüche für folgende(n) Vertragsstaat(en): AT, BE, CH, DE, DK, FR, GB, GR, IT, LI, LU, NL, SE)

1. Streckungsmittelformulierung zur landwirtschaftlichen Anwendung, die in der Lage ist, in Verbindung mit einem handelsüblichen Pestizid für Zitruspflanzungen diesem wirkungsverlängernde Eigenschaften und erhöhte Wirksamkeit zu verleihen; dabei umfaßt das Streckungsmittel:
einen Gewichtsanteil eines Gemischs aus zwei oder mehr nichtionischen grenzflächenaktiven Stoffen, von denen jeder einen HLB-Wert von 11 bis 15 aufweist,
0,25 bis 2 Teile eines anorganischen Polyoxids oder daraus abgeleiteten Salzes und
0,1 bis 1 Teil eines wassermischbaren organischen Oxykohlenwasserstofflösemittels.

2. Streckungsmittelformulierung zur landwirtschaftlichen Anwendung nach Anspruch 1, worin das genannte Gemisch aus zwei oder mehr nichtionischen grenzflächenaktiven Stoffen mindestens 10 Gewichtsprozent Alkylphenoxy(polyethylenoxy)ethanol beinhaltet.

3. Streckungsmittelformulierung zur landwirtschaftlichen Anwendung nach Anspruch 1 oder 2, worin das genannte Gemisch aus zwei oder mehr nichtionischen grenzflächenaktiven Stoffen mindestens 10 Gewichtsprozent *p*-Octylphenoxy(polyethylenoxy)ethanol beinhaltet.

4. Streckungsmittelformulierung zur landwirtschaftlichen Anwendung nach Anspruch 1 oder 2, worin das genannte Gemisch aus nichtionischen grenzflächenaktiven Stoffen mindestens 10 Gewichtsprozent *p*-Nonylphenoxy(polyethylenoxy)ethanol beinhaltet.

5. Streckungsmittelformulierung zur landwirtschaftlichen Anwendung nach Anspruch 1, worin das genannte Gemisch aus nichtionischen grenzflächenaktiven Stoffen mindestens 10 Gewichtsprozent eines Alkylphenolats, das mit etwa 9 Einheiten Ethylenoxid kondensiert wurde, beinhaltet.

6. Streckungsmittelformulierung zur landwirtschaftlichen Anwendung nach jedem der Ansprüche 1 bis 5, worin das genannte Polyoxid oder dessen Salz ein Phosphorpolyoxid ist.

7. Streckungsmittelformulierung zur landwirtschaftlichen Anwendung nach jedem der Ansprüche 1 bis 5, worin das genannte anorganische Polyoxid oder dessen Salz ein Siliziumdioxidpolyoxid ist.

8. Streckungsmittelformulierung zur landwirtschaftlichen Anwendung nach Anspruch 7, worin das genannte anorganische Polyoxid oder dessen Salz Natriummetasilicat ist.

9. Streckungsmittelformulierung zur landwirtschaftlichen Anwendung nach Anspruch 6, worin das genannte anorganische Polyoxid oder dessen Salz Natriumtripolyphosphat ist.

10. Streckungsmittelformulierung zur landwirtschaftlichen Anwendung nach jedem der Ansprüche 1 bis 5, worin das genannte anorganische Polyoxid oder dessen Salz ein Borsalz ist.

11. Streckungsmittelformulierung zur landwirtschaftlichen Anwendung nach Anspruch 10, worin das genannte anorganische Polyoxid oder dessen Salz Natriumdiborat ist.

12. Streckungsmittelformulierung zur landwirtschaftlichen Anwendung nach Anspruch 10, worin das genannte anorganische Polyoxid oder dessen Salz Natriumtetraborat ist.

13. Streckungsmittelformulierung zur landwirtschaftlichen Anwendung nach jedem der Ansprüche 1 bis 12, das zusätzlich Natrium- oder Kaliumhydroxid umfaßt, das der Formulierung zugefügt wird, um den pH der Lösung auf einen Wert zwischen 7 und 14 einzustellen.

14. Streckungsmittelformulierung zur landwirtschaftlichen Anwendung nach jedem der Ansprüche 1 bis 13, worin das genannte organische Lösemittel 2-Butoxyethanol ist.

15. Streckungsmittelformulierung zur landwirtschaftlichen Anwendung nach jedem der Ansprüche 1 bis 13, worin das genannte organische Lösemittel Propylenglycol ist.

16. Streckungsmittelformulierung zur landwirtschaftlichen Anwendung nach jedem der Ansprüche 1 bis 13, worin das genannte organische Lösemittel Butylenglycol ist.

17. Pestizidformulierung zur landwirtschaftlichen Anwendung, die ein handelsübliches Pestizid in Verbindung mit einer Streckungsmittelformulierung gemäß einem der oben genannten Ansprüche umfaßt.

18. Formulierung nach Anspruch 17, die zusätzlich Wasser zur Verdünnung auf eine versprühbare Pestizidkonzentration umfaßt.

19. Formulierung nach Anspruch 17 oder 18, worin das handelsübliche Pestizid ein Sprühöl umfaßt.

20. Formulierung nach Anspruch 19, worin das Streckungsmittel Poly(ethylenoxy)sorbitololeatester als nichtionischen grenzflächenaktiven Stoff beinhaltet.

21. Verfahren zum Pflanzenschutz bei Zitruspflanzungen, das die Anwendung einer Formulierung nach Anspruch 18 durch Besprühen der genannten Pflanzung umfaßt, wobei das genannte Streckungsmittel dem handelsüblichen Pestizid wirkungsverlängernde Eigenschaften verleiht und die Wirksamkeit des handelsüblichen Pestizids steigert.

## Patentansprüche (Patentansprüche für folgende(n) Vertragsstaat(en): ES)

1. Verfahren zum Pflanzenschutz bei Zitruspflanzungen, das die Sprühanwendung einer Pestizidformulierung zur landwirtschaftlichen Anwendung umfaßt; die Formulierung umfaßt:
(i) ein handelsübliches Pestizid
(ii) eine Streckungsmittelformulierung zur landwirtschaftlichen Anwendung, die in der Lage ist, in Verbindung mit einem handelsüblichen Pestizid für Zitruspflanzungen diesem wirkungsverlängernde Eigenschaften zu verleihen und seine Wirksamkeit zu steigern und
(iii) Wasser als Verdünner zur Herstellung einer versprühbaren Formulierung, wobei die genannte Streckungsmittelformulierung umfaßt:
einen Gewichtsanteil eines Gemischs aus zwei oder mehr nichtionischen grenzflächenaktiven Stoffen, von denen jeder einen HLB-Wert von 11 bis 15 aufweist,
0,25 bis 2 Teile eines anorganischen Polyoxids oder daraus abgeleiteten Salzes und
0,1 bis 1 Teil eines wassermischbaren organischen Oxykohlenwasserstofflösemittels.

2. Verfahren nach Anspruch 1, worin die genannte Streckungsmittelformulierung mindestens 10 Gewichtsprozent Alkylphenoxy(polyethylenoxy)ethanol beinhaltet.

3. Verfahren nach Anspruch 1 oder 2, worin die genannte Streckungsmittelformulierung mindestens 10 Gewichtsprozent *p*-Octylphenoxy(polyethylenoxy)ethanol beinhaltet.

4. Verfahren nach Anspruch 1 oder 2, worin die genannte Streckungsmittelformulierung mindestens 10 Gewichtsprozent *p*-Nonylphenoxy(polyethylenoxy)ethanol beinhaltet.

5. Verfahren nach Anspruch 1, worin die genannte Streckungsmittelformulierung mindestens 10 Gewichtsprozent eines Alkylphenolats, das mit etwa 9 Einheiten Ethylenoxid kondensiert wurde, beinhaltet.

6. Verfahren nach jedem der Ansprüche 1 bis 5, worin die genannte Streckungsmittelformulierung ein Phosphorpolyoxid beinhaltet.

7. Verfahren nach jedem der Ansprüche 1 bis 5, worin die genannte Streckungsmittelformulierung ein Siliziumdioxidpolyoxid beinhaltet.

8. Verfahren nach Anspruch 7, worin die genannte Streckungsmittelformulierung Natriummetasilicat beinhaltet.

9. Verfahren nach Anspruch 6, worin die genannte Streckungsmittelformulierung Natriumtripolyphosphat beinhaltet.

10. Verfahren nach jedem der Ansprüche 1 bis 5, worin die genannte Streckungsmittelformulierung ein Borsalz beinhaltet.

11. Verfahren nach Anspruch 10, worin die genannte Streckungsmittelformulierung ein Natriumdiborat beinhaltet.

12. Verfahren nach Anspruch 10, worin die genannte Streckungsmittelformulierung ein Natriumtetraborat beinhaltet.

13. Verfahren nach jedem der Ansprüche 1 bis 12, worin die genannte Streckungsmittelformulierung zusätzlich Natrium- oder Kaliumhydroxid umfaßt, um den pH auf einen Wert zwischen 7 und 14 einzustellen.

14. Verfahren nach jedem der Ansprüche 1 bis 13, worin die genannte Streckungsmittelformulierung 2-Butoxyethanol beinhaltet.

15. Verfahren nach jedem der Ansprüche 1 bis 13, worin die genannte Streckungsmittelformulierung Propylenglycol beinhaltet.

16. Verfahren nach jedem der Ansprüche 1 bis 13, worin die genannte Streckungsmittelformulierung Butylenglycol beinhaltet.

17. Verfahren nach jedem der Ansprüche 1 bis 16, worin das handelsübliche Pestizid ein Öl zur Lösung/Emulsion umfaßt.

18. Verfahren nach Anspruch 17, worin die Streckungsmittelformulierung Poly(ethylenoxy)sorbitololeatester als nichtionischen grenzflächenaktiven Stoff beinhaltet.

19. Verfahren zur Herstellung einer Pestizidformulierung zur landwirtschaftlichen Anwendung zum Gebrauch im Rahmen des Verfahrens nach Anspruch 1, das die Kombination eines handelsüblichen Pestizids, einer Streckungsmittelformulierung zur landwirtschaftlichen Anwendung wie in Anspruch 1 definiert sowie Wassers als Verdünnungsmittel zur Herstellung einer versprühbaren Formulierung beinhaltet.

## Revendications (Revendications pour l'(les) Etat(s) contractant(s) suivant(s): AT, BE, CH, DE, DK, FR, GB, GR, IT, LI, LU, NL, SE)

1. Composition agricole émulsifiante et diluante, capable de conférer des propriétés persistantes et d'accroître l'efficacité lorsqu'on la combine à un poison économique sur des cultures d'agrumes, l'émulsifiant comprenant :
une partie en poids d'un mélange de deux agents tensio-actifs non ioniques ou plus ayant chacun un rapport hydro-lipophile de 11 à 15,
0,25 à 2 parties d'un polyoxyde minéral ou d'un sel de celui-ci et
0,1 à 1 partie d'un solvant organique oxyhydrocarboné miscible à l'eau.

2. Composition agricole émulsifiante et diluante selon la revendication 1, dans laquelle ledit mélange de deux agents tensio-actifs non ioniques ou plus comprend au moins 10 % en poids d'un alkylphénoxy(polyéthylénoxy)éthanol.

3. Composition agricole émulsifiante et diluante selon la revendication 1 ou la revendication 2, dans laquelle ledit mélange de deux agents tensio-actifs non ioniques ou plus comprend au moins 10 % en poids de p-octylphénoxy(polyéthylénoxy)éthanol.

4. Composition agricole émulsifiante et diluante selon la revendication 1 ou la revendication 2, dans laquelle ledit mélange d'agents tensio-actifs non ioniques comprend au moins 10 % en poids de p-nonylphénoxy(polyéthylénoxy)éthanol.

5. Composition agricole émulsifiante et diluante selon la revendication 1, dans laquelle ledit mélange d'agents tensio-actifs non ioniques comprend au moins 10 % en poids d'un alkylphénolate condensé avec environ 9 motifs d'oxyde d'éthylène.

6. Composition agricole émulsifiante et diluante selon l'une quelconque des revendications 1 à 5, dans laquelle ledit polyoxyde minéral ou son sel est un polyoxyde de phosphore.

7. Composition agricole émulsifiante et diluante selon l'une quelconque des revendications 1 à 5, dans laquelle ledit polyoxyde minéral ou son sel est un polyoxyde de silice.

8. Composition agricole émulsifiante et diluante selon la revendication 7, dans laquelle ledit polyoxyde minéral ou son sel est le métasilicate de sodium.

9. Composition agricole émulsifiante et diluante selon la revendication 6, dans laquelle ledit polyoxyde minéral ou son sel est le tripolyphosphate de sodium.

10. Composition agricole émulsifiante et diluante selon l'une quelconque des revendications 1 à 5, dans laquelle ledit polyoxyde minéral ou son sel est un sel de bore.

11. Composition agricole émulsifiante et diluante selon la revendication 10, dans laquelle ledit polyoxyde minéral ou son sel est le pyroborate de sodium.

12. Composition agricole émulsifiante et diluante selon la revendication 10, dans laquelle ledit polyoxyde minéral ou son sel est le tétraborate de sodium.

13. Composition agricole émulsifiante et diluante selon l'une quelconque des revendications 1 à 12, comprenant de plus de l'hydroxyde de sodium ou de potassium ajouté à la formulation pour ajuster le pH de la solution entre 7 et 14.

14. Composition agricole émulsifiante et diluante selon l'une quelconque des revendications 1 à 13, dans laquelle ledit solvant organique est le 2-butoxyéthanol.

15. Composition agricole émulsifiante et diluante selon l'une quelconque des revendications 1 à 13, dans laquelle ledit solvant organique est le propylèneglycol.

16. Composition agricole émulsifiante et diluante selon l'une quelconque des revendications 1 à 13, dans laquelle ledit solvant organique est le butylèneglycol.

17. Formulation pesticide agricole comprenant un poison économique en combinaison avec une composition diluante selon l'une quelconque des revendications précédentes.

18. Formulation selon la revendication 17 comprenant de plus de l'eau comme diluant pour établir une concentration du poison permettant la pulvérisation.

19. Formulation selon la revendication 17 ou la revendication 18, dans laquelle le poison économique comprend du crop oil

20. Formulation selon la revendication 19, dans laquelle le diluant comprend l'ester poly(éthylénoxy)oléate de sorbitol en tant qu'agent tensio-actif non ionique.

21. Procédé de maîtrise des nuisibles sur une culture d'agrumes comprenant l'application par pulvérisation d'une formulation selon la revendication 18 à ladite culture, ledit diluant conférant des propriétés persistantes au poison économique et accroissant l'efficacité du poison économique.

## Revendications (Revendications pour l'(les) Etat(s) contractant(s) suivant(s): ES)

1. Procédé de maîtrise des nuisibles sur une culture d'agrumes, comprenant l'application par pulvérisation d'une formulation agricole pesticide comprenant :
(i) un poison économique
(ii) un diluant émulsifiant agricole, capable de conférer des propriétés persistantes et d'accroître l'efficacité lorsqu'on le combine avec un poison économique sur des cultures d'agrumes, et
(iii) de l'eau en tant que diluant, pour fournir une formulation pulvérisable, ledit diluant émulsifiant comprenant :
une partie en poids d'un mélange de deux agents tensio-actifs non ioniques ou plus ayant chacun un rapport hydro-lipophile de 11 à 15,
0,25 à 2 parties d'un polyoxyde minéral ou d'un sel de celui-ci, et
0,1 à 1 partie d'un solvant organique oxyhydrocarboné miscible à l'eau.

2. Procédé selon la revendication 1, dans lequel ledit diluant émulsifiant comprend au moins 10 % en poids d'un alkylphénoxy(polyéthylénoxy)éthanol.

3. Procédé selon la revendication 1 ou la revendication 2, dans lequel ledit diluant émulsifiant comprend au moins 10 % en poids de p-octylphénoxy(polyéthylénoxy)éthanol.

4. Procédé selon la revendication 1 ou la revendication 2, dans lequel ledit diluant émulsifiant comprend au moins 10 % en poids de p-nonylphénoxy(polyéthylénoxy)éthanol.

5. Procédé selon la revendication 1, dans lequel ledit diluant émulsifiant comprend au moins 10 % en poids d'un alkylphénolate condensé avec environ 9 motifs d'oxyde d'éthylène.

6. Procédé selon l'une quelconque des revendications 1 à 5, dans lequel ledit diluant émulsifiant comprend un polyoxyde de phosphore.

7. Procédé selon l'une quelconque des revendications 1 à 5, dans lequel ledit diluant émulsifiant comprend un polyoxyde de silice.

8. Procédé selon la revendication 7, dans lequel ledit diluant émulsifiant comprend du métasilicate de sodium.

9. Procédé selon la revendication 6, dans lequel ledit diluant émulsifiant comprend du tripolyphosphate de sodium.

10. Procédé selon l'une quelconque des revendications 1 à 5, dans lequel ledit diluant émulsifiant comprend un sel de bore.

11. Procédé selon la revendication 10, dans lequel ledit diluant émulsifiant comprend du pyroborate de sodium.

12. Procédé selon la revendication 10, dans lequel ledit diluant émulsifiant comprend du tétraborate de sodium.

13. Procédé selon l'une quelconque des revendications 1 à 12, dans lequel ledit diluant émulsifiant comprend de plus de l'hydroxyde de sodium ou de potassium pour ajuster le pH entre 7 et 14.

14. Procédé selon l'une quelconque des revendications 1 à 13, dans lequel ledit diluant émulsifiant comprend du 2-butoxyéthanol.

15. Procédé selon l'une quelconque des revendications 1 à 13, dans lequel ledit diluant émulsifiant comprend du propylèneglycol.

16. Procédé selon l'une quelconque des revendications 1 à 13, dans lequel ledit diluant émulsifiant comprend du butylèneglycol.

17. Procédé selon l'une quelconque des revendications 1 à 16, dans lequel le poison économique comprend du crop oil.

18. Procédé selon la revendication 17, dans lequel le diluant émulsifiant comprend l'ester poly(éthylénoxy)oléate de sorbitol en tant qu'agent tensio-actif non ionique.

19. Procédé de préparation d'une formulation pesticide agricole pour l'utilisation dans un procédé selon la revendication 1, qui comprend la combinaison d'un poison économique, d'un diluant émulsifiant agricole tel que défini dans la revendication 1 et d'eau en tant que diluant, pour fournir une formulation pulvérisable.
